(19) Europäisches Patentamt
European Patent Office
Office européen des brevets

(11) **EP 3 337 961 B1**

(12) **EUROPÄISCHE PATENTSCHRIFT**

(45) Veröffentlichungstag und Bekanntmachung des Hinweises auf die Patenterteilung:
**13.05.2020   Patentblatt 2020/20**

(21) Anmeldenummer: **16738821.4**

(22) Anmeldetag: **15.07.2016**

(51) Int Cl.:
**F01L 1/34** *(2006.01)*          **F01L 1/352** *(2006.01)*
**F01L 1/356** *(2006.01)*          **F02D 41/00** *(2006.01)*

(86) Internationale Anmeldenummer:
**PCT/EP2016/066899**

(87) Internationale Veröffentlichungsnummer:
**WO 2017/029039 (23.02.2017 Gazette 2017/08)**

(54) **PRÄDIKTION DER PHASENLAGE EINER NOCKENWELLE**

PREDICTION OF THE PHASE POSITION OF A CAMSHAFT

PRÉDICTION DE LA POSITION DE PHASE D'UN ARBRE À CAMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2015   DE 102015215813**

(43) Veröffentlichungstag der Anmeldung:
**27.06.2018   Patentblatt 2018/26**

(73) Patentinhaber: **Volkswagen Aktiengesellschaft 38440 Wolfsburg (DE)**

(72) Erfinder:
• **TOMFORDE, Michael 38518 Gifhorn (DE)**
• **SCHWIEGER, Stephan 38104 Braunschweig (DE)**

(56) Entgegenhaltungen:
DE-A1-102009 007 071          GB-A- 2 382 660
US-B1- 6 363 316          US-B1- 6 488 008

**Beschreibung**

Die Erfindung betrifft ein Verfahren, ein Computerprogramm und ein Motorsteuergerät zur Prädiktion der Phasenlage einer Nockenwelle.

Bei Nockenwellenantrieben ohne Verstellung wird die Nockenwelle über eine feste Verbindung wie beispielsweise einen Zahnriemen, eine Kette oder Zahnräder von der Kurbelwelle mit der halben Drehzahl angetrieben. Eine feste Kopplung der Nockenwelle an die Kurbelwelle führt allerdings zu einer ineffizienten Zylinderfüllung, d.h. einem nicht optimalen Frischluftanteil im Brennraum. Bei Ottomotoren wird deshalb der Frischluftanteil im Brennraum über eine Füllungserfassungsfunktion im Motorsteuergerät erfasst. Dieser Frischluftanteil im Brennraum wird maßgeblich durch den Öffnungs- und Schließzeitpunkt des Ladungswechselventils beeinflusst. Um in allen Drehzahlbereichen eine möglichst effiziente Zylinderfüllung zu erreichen, werden mittels einer Nockenwellenverstellung die Einlass- und Auslass-Steuerzeiten in Abhängigkeit von Drehzahl und Drosselklappenstellung verändert. Zur Nockenwellenverstellung wird eine Verstelleinheit, beispielsweise ein mit Motoröldruck betriebener hydraulischer Phasenversteller eingesetzt, der auch als Schwenkmotorphasenversteller bezeichnet wird und gewöhnlich an den Nockenwellenenden in der Kraftübertragung platziert ist.

Die Berechnung der Füllungserfassungsfunktion findet zu einem definierten Kurbelwellenwinkel statt, der zeitlich vor dem Öffnen und Schließen des Ladungswechselventils liegt. In dem Zeitraum zwischen Berechnung und Öffnung bzw. Schließung des Ventils wird die Nockenwelle durch die Verstelleinheit weiterhin relativ zur Kurbelwelle verstellt. Daraus ergeben sich real andere Öffnungs- und Schließwinkel als in der Berechnung der Füllungserfassung verwendet wurden. Diese Differenzwinkel zwischen Berechnung und tatsächlichen Öffnungs- und Schließwinkeln des Ventils können zu einem Fehler in der Füllungsberechnung führen.

Zur Minimierung des Füllungsfehlers müsste zum Zeitpunkt der Berechnung der Füllungserfassungsfunktion die Position der Nockenwelle zum Zeitpunkt des Öffnens und des Schließens bekannt sein. Es ist somit eine Prädiktion der zukünftigen Nockenwellenposition erforderlich.

Die deutsche Patentanmeldung DE 10 2012 213 539 A1 offenbart ein Verfahren zur Bestimmung einer Phasenlage einer verstellbaren Nockenwelle einer Brennkraftmaschine, die ein Geberrad und einen Nockenwellenversteller umfasst. Die Phasenlage der Nockenwelle wird anhand von durch das Geberrad ausgelösten Phasenflankeninterrupts und eines Modells, das abhängig von mindestens einer Betriebskenngröße des Nockenwellenverstellers ist, bestimmt. Das Verfahren ermöglicht eine genaue Bestimmung einer Phasenlage einer verstellbaren Nockenwelle, bietet aber keine Optimierung der Berechnung der Füllungserfassungsfunktion. Ein weiteres Beispiel ist im Dokument US 6 488 008 B1 offenbart.

Aufgabe der vorliegenden Erfindung ist es, einen neuen Ansatz zur Prädiktion der Nockenwellenposition bereitzustellen, der die oben genannten Nachteile wenigstens teilweise überwindet.

Diese Aufgabe wird durch das erfindungsgemäße Verfahren nach Anspruch 1, ein erfindungsgemäßes Computerprogramm nach Anspruch 6 und ein erfindungsgemäßes Motorsteuergerät nach Anspruch 7 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Bei einem erfindungsgemäßen Verfahren zur Prädiktion einer zukünftigen Nockenwellenposition wird ein Regelkreis oder ein Teil eines Regelkreises, der wenigstens eine Verstelleinrichtung umfasst, durch eine Übertragungsfunktion approximiert und eine zukünftige Nockenwellenposition wird auf Grundlage der Übertragungsfunktion ermittelt.

Bei dem Regelkreis kann es sich beispielsweise um einen geschlossenen Regelkreis handeln. In einem bevorzugten Ausführungsbeispiel handelt es sich bei dem Regelkreis um einen geschlossenen Regelkreis bestehend aus einem Nockenwellenlageregler und einer Verstelleinrichtung. Alternativ zu einem geschlossenen Regelkreis kann aber auch lediglich ein Teil des Regelkreises z.B. genau die Stelleinrichtung (Phasenstellen) approximiert werden.

Im Gegensatz zu einer linearen Extrapolation mit konstanter Verstellgeschwindigkeit hat eine Modellierung des Regelkreises oder eines Teils des Regelkreises als Übertragungssystem den Vorteil, dass keine Phasenverschiebung aus der Bestimmung der Verstellgeschwindigkeit vorliegt.

Da beim erfindungsgemäßen Verfahren die Ansteuerung der Nockenwellenverstelleinheit berücksichtigt wird, ergibt sich insbesondere eine hohe Gesamtgenauigkeit der Prädiktion.

Gemäß einer unten näher beschriebenen Ausführungsform handelt es sich bei der Übertragungsfunktion um ein PT1-Übertragungsglied. Die Abbildung des Regelkreises als PT1-Übertragungsglied ist besonders rauscharm und liefert gute Ergebnisse. Weiterhin hat die Abbildung des Regelkreises als PT1-Übertragungsglied einen geringen Implementierungsaufwand.

Auf Grundlage einer PT1-Übertragungsfunktion kann die prädizierte zukünftige Nockenwellenposition beispielsweise gemäß folgender Gleichung ermittelt werden:

$$y_{pred} = A^n\, y + \sum_{i=0}^{n-1} A^i\, B\, u_{soll}$$

wobei $y_{pred}$ die prädizierte Nockenwellenposition bezeichnet, $u_{soll}$ den Sollwert für die Nockenwellenposition bezeichnet, y die Nockenwellenposition gemessen an der letzten Flanke bezeichnet, *A* und *B* Konstanten eines zeitdiskreten Zustandsraummodells des PT1-Übertragungsglieds sind, und n die Anzahl an Prädiktionsschritten angibt.

Die Anzahl n an Prädiktionsschritten kann beliebig gewählt werden. In einem bevorzugten Ausführungsbeispiel beträgt die Anzahl *n* an Prädiktionsschritten *n* = 5. Mit einer solchen Anzahl von Prädiktionsschritten kann bei geringem Rechenbedarf ein ausreichend genaues Ergebnis erzielt werden.

Als alternative Übertragungsfunktionen kann auch ein PT2-Übertragungsglied, oder ein IT1-Übertragungsglied zum Einsatz kommen.

Das Verfahren kann insbesondere dazu verwendet werden, um eine prädizierte zukünftige Nockenwellenposition zum Zeitpunkt des Öffnens und/oder des Schließens des Ladungswechselventils zu ermitteln.

Eine ermittelte prädizierte Nockenwellenposition zum Zeitpunkt des Öffnens bzw. des Schließens des Ventils kann auf vorteilhafte Weise in einer Füllungserfassungsfunktion zur Optimierung des Frischluftanteils im Brennraum eines Kraftfahrzeugs verwendet werden. Eine Korrektur der Abweichungen von der realen Füllung kann unter anderem zu einer verbesserten Berechnung der Kraftstoffmasse führen und damit zu einer Verminderung der Schadstoffemissionen. Sie kann sich ferner auch positiv auf das Fahrverhalten auswirken.

Eine Filterzeit der Übertragungsfunktion kann mittels eines Kennfelds bestimmt werden. Alternativ kann eine Filterzeit auch berechnet werden.

Die Erfindung betrifft ferner auch ein Computerprogramm, das dazu ausgelegt ist, die hier beschriebenen Verfahren auszuführen. Das Computerprogramm kann beispielsweise in einem Motorsteuerungsgerät implementiert sein, um die hier beschriebenen Verfahren auszuführen

Ausführungsbeispiele der Erfindung werden nun beispielhaft und unter Bezugnahme auf die beigefügten Zeichnungen beschrieben, in denen:

Fig. 1 schematisch ein Ausführungsbeispiel einer Übertragungsfunktion zeigt;

Fig. 2 schematisch ein Ausführungsbeispiel eines Verfahrens zur Prädiktion einer zukünftigen Nockenwellenposition zeigt; und

Fig. 3 schematisch ein Ausführungsbeispiel eines Motorsteuergeräts zur Prädiktion einer zukünftigen Nockenwellenposition zeigt.

Bei einem erfindungsgemäßen Verfahren zur Prädiktion einer zukünftigen Nockenwellenposition wird ein Regelkreis umfassend einen Nockenwellenlageregler und eine Verstelleinrichtung durch eine Übertragungsfunktion approximiert und eine zukünftige Nockenwellenposition wird auf Grundlage der Übertragungsfunktion ermittelt.

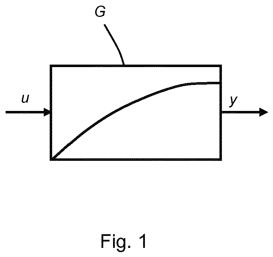

Ein Ausführungsbeispiel einer Übertragungsfunktion ist in Fig. 1 gezeigt. Die Übertragungsfunktion G approximiert das Verhalten eines Systems. Die Übertragungsfunktion G weist eine Eingangsgröße u und eine Ausgangsgröße y auf. Die Übertragungsfunktion G modelliert das Systemverhalten, d.h. wie die Ausgangsgröße y des Systems auf Änderungen der Eingangsgröße u des Systems reagiert.

In den im Folgenden beschriebenen Ausführungsbeispielen beschreibt die Übertragungsfunktion insbesondere den Regelkreis bestehend aus Nockenwellenlageregler und Verstelleinrichtung eines Kraftfahrzeugs.

Wie eingangs beschrieben wurde, wird der Frischluftanteil im Brennraum maßgeblich vom Zeitpunkt des Öffnens und Schließens des durch die Nockenwelle angesteuerten Gaswechselventils beeinflusst. Diese Zeitpunkte können äquivalent als Kurbelwellenwinkelpositionen aufgefasst werden. Durch die Nockenwellenverstellung werden diese Winkel verändert. Eine Nockenwellenregelung optimiert den Frischluftanteil im Brennraum eines Kraftfahrzeugs durch Ermittlung einer optimierten Füllung und entsprechenden Regelung der Zeitpunkte des Öffnens und Schließens des durch die Nockenwelle angesteuerten Gaswechselventils.

Im nun beschriebenen Ausführungsbeispiel der Erfindung wird der geschlossene Regelkreis bestehend aus Nockenwellenlageregler und Verstelleinrichtung als PT1-Übertragungsglied (Tiefpass erster Ordnung) approximiert, das auf einem zeitdiskreten Zustandsraummodell der Form

$$x(k + 1) = A\, x(k) + B\, u(k)$$

$$y(k + 1) = C\, x(k) + D\, u(k)$$

basiert, wobei $x(k)$ ein Systemzustand ist, $y(k)$ die Regelgröße, hier die Nockenwellenposition zum Zeitschritt $k$ ist, und $u(k)$ die Stellgröße, hier also der Sollwert für die Nockenwellenposition zum Zeitschritt $k$ ist.

Für ein PT1-Übertragungsglied kann eine Zustandsraumdarstellung gewählt werden, in der $C = 1$ und $D = 0$ ist, so dass sich das Zustandsraummodell vereinfacht zu:

$$x(k + 1) = y(k + 1) = A\, x(k) + B\, u(k)$$

Damit entspricht für das PT1-Beispiel der Systemzustand $x$ der Regelgröße $y$, d.h. hier der Nockenwellenistposition.

Basierend auf diesem zeitdiskreten Zustandsraummodell kann die zukünftige Nockenwellenposition $y$ des PT1-Übertragungsglieds in $n$ Prädiktionsschritten auf Basis der Gleichung

$$y(k + n) = A^n\, y(k) + \sum_{i=0}^{n-1} A^i\, B\, u(k + n - 1 - i)$$

ermittelt werden.

Unter Annahme eines konstanten Sollwerts $u(k) = u_{soll}$ für die Nockenwellenposition über den Prädiktionszeitraum vereinfacht sich dies zu:

$$y(k + n) = A^n\, y(k) + \sum_{i=0}^{n-1} A^i\, B\, u_{soll}$$

wobei $y(k + n)$ die prädizierte Nockenwellenposition nach n Prädiktionsschritten bezeichnet und $y(k)$ die Nockenwellenposition gemessen an der letzten Flanke ist.

Die Konstanten $A$ und $B$ des zeitdiskreten Zustandsraummodells des PT1-Übertragungsglieds werden in diesem Ausführungsbeispiel wie folgt bestimmt:

$$A = 1 - \frac{h}{T_1}$$

$$B = \frac{h}{T_1}$$

$$h = \frac{60}{n_{mot}} \cdot \frac{w_{pred}}{360} \cdot \frac{1}{n}$$

Hierbei bezeichnet $w_{pred}$ den Winkelabstand zwischen der letzten gemessenen Flanke des Nockenwellengeberrades und den Punkten Ventil öffnet bzw. Ventil schließt. $T_1$ bezeichnet die Zeitkonstante des PT1-Übertragungsgliedes und $n_{mot}$ ist die Motordrehzahl, d.h. die Drehzahl der Kurbelwelle, wie sie von der Motorsteuerung bereitgestellt wird, und $n$ ist eine vordefinierte ganze Zahl, welche die Anzahl an Prädiktionsschritten angibt. $h$ kann als eine Prädiktionsschrittdauer aufgefasst werden.

Da die Winkel für das Öffnen und das Schließen des Gaswechselventils über die Nockenkontur der Nockenwelle definiert sind, kann anhand des Kurbelwinkelabstandes zwischen der Flanke und dem Öffnungswinkel über die Motordrehzahl $n_{mot}$ eine äquivalente Prädiktionszeit ermittelt werden und für diesen Zeitraum das PT1-Verhalten extrapoliert werden.

Die Filterzeit, beispielsweise obige Zeitkonstante $T_1$ des PT1-Übertragungsglieds, kann vom Ansteuersignal der Nockenwellenverstelleinheit, d.h. dem Tastverhältnis, mit dem die Endstufe des Regelventils der entsprechenden Nockenwellenverstelleinheit angesteuert wird, sowie von das Prozessverhalten beeinflussenden Größen wie Öltemperatur oder Öldruck abhängen. Sie kann beispielsweise auf Grundlage der von der Motorsteuerung bereitgestellten Prozessgrößen mittels eines Kennfelds ermittelt werden. Alternativ kann die Zeitkonstante $T_1$ auch mittels Gleichungen aus den bereitgestellten Prozessgrößen ermittelt werden.

Folgende Tabelle zeigt ein Beispiel, wie für beispielhafte 3000 U/min und Spätverstellung aus einer gegebenen Öltemperatur eine Zeitkonstante $T_1$ abgeleitet werden kann:

| Öltemperatur | Zeitkonstante $T_1$ |
|---|---|
| -15 °C | 0.02677 |
| 30 °C | 0.02616 |
| 60 °C | 0.02497 |
| 105 °C | 0.01702 |
| 130 °C | 0.01628 |

Wie der Tabelle zu entnehmen ist, wird die Zeitkonstante $T_1$ hier so gewählt, dass sie mit der Öltemperatur abnimmt. Dies liegt daran, dass das Öl bei niedrigen Temperaturen noch relativ zähflüssig ist und daher die Verstellgeschwindigkeit gering ist. In einem Kennfeld können auch entsprechende Werte für variierte Einflussfaktoren abgelegt werden.

Damit kann die zukünftige Nockenwellenposition in beispielsweise fünf Prädiktionsschritten auf Basis der Gleichung

$$y_{pred} = A^5\, y + \sum_{i=0}^{4} A^i\, B\, u_{soll}$$

ermittelt werden, wobei $y_{pred}$ die prädizierte Nockenwellenposition nach fünf Prädiktionsschritten bezeichnet und y die Nockenwellenposition gemessen an der letzten Flanke ist.

Je nachdem, ob für $w_{pred}$ der Winkelabstand zwischen der letzten gemessenen Flanke des Nockenwellengeberrades und den Punkten Ventil öffnet oder Ventil schließt eingesetzt wird, kann mittels obiger Funktion die prädizierte Nockenwellenpositionen für Einlassventil öffnet bzw. schließt ermittelt werden. Gleichermaßen kann auch eine Prädiktion für die zukünftige Prädiktion des Nockenwellengeberrades für Auslassventil schließt bestimmt werden.

Die solchermaßen ermittelten prädizierten Nockenwellenpositionen können einer Füllungserfassungsfunktion bereitgestellt werden, die damit den Zeitpunkt des Öffnens bzw. des Schließens des durch die Nockenwelle angesteuerten Gaswechselventils besser ermitteln kann.

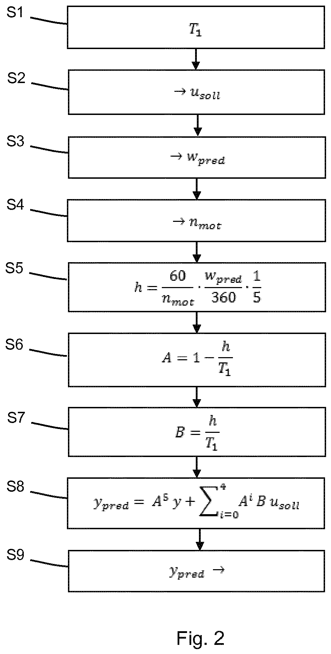

Fig. 2 zeigt schematisch ein Ausführungsbeispiel eines Verfahrens zur Prädiktion einer zukünftigen Nockenwellenposition. In einem Schritt S1 wird eine Zeitkonstante $T_1$ der Übertragungsfunktion bestimmt, beispielsweise durch Auswertung eines Kennfelds und entsprechender Prozessgrößen, die von der Motorsteuereinheit bereitgestellt werden. In Schritt S2 wird ein Sollwert $u_{soll}$ für die Nockenwellenposition von der Nockenwellenregelung abgerufen. In Schritt S3 wird der Winkelabstand $w_{pred}$ zwischen der letzten gemessenen Flanke des Nockenwellengeberrades und dem Punkt Ventil öffnet ermittelt. In Schritt S4 wird die aktuelle Motordrehzahl $n_{mot}$ von der Motorsteuerung abgerufen. In Schritt S5 wird auf Grundlage der Motordrehzahl $n_{mot}$ und dem Winkelabstand $w_{pred}$ die Konstante h berechnet. In Schritt S6 und S7 werden auf Grundlage der Prädiktionsschrittdauer h und der Zeitkonstante $T_1$ zwei Parameter A und B der Übertragungsfunktion berechnet. In Schritt S8 wird auf Grundlage der berechneten Parameter A und B und auf Grundlage des Sollwerts $u_{soll}$ für die Nockenwellenposition aus der aktuellen Nockenwellenposition y eine prädizierte zukünftige Nockenwellenposition $y_{pred}$ berechnet. In Schritt S9 wird diese prädizierte zukünftige Nockenwellenposition $y_{pred}$ einer Füllungserfassungsfunktion bereitgestellt.

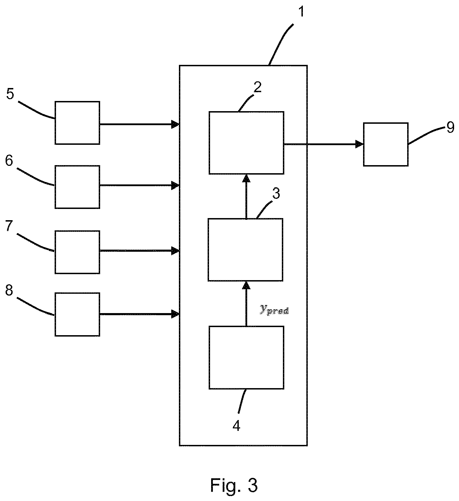

Fig. 3 zeigt schematisch ein Ausführungsbeispiel eines Motorsteuergeräts zur Prädiktion einer zukünftigen Nockenwellenposition. Ein Motorsteuergerät 1 umfasst eine Nockenwellenregelungseinheit 2, eine Füllungserfassungsfunktionseinheit 3 und eine Nockenwellenprädiktionseinheit 4. Die Nockenwellenprädiktionseinheit 4 ermittelt gemäß der oben beschriebenen Verfahren eine prädizierte zukünftige Nockenwellenposition $y_{pred}$ und stellt diese der Füllungserfasungsfunktionseinheit 3 bereit. Die Nockenwellenregelungseinheit 2 regelt auf Basis der Ausgabe der Füllungserfassungsfunktionseinheit 3 eine Nockenwellenposition und gibt entsprechende Steuersignale an einen Nockenwellenversteller 9 aus. Ein Nockenwellengeberrad 5 mit einem entsprechenden Sensor stellt dem Motorsteuergerät Messsignale bereit, welche Rückschlüsse auf die aktuelle Position der Nockenwelle erlauben. Ein Kurbelwellengeberrad 6 mit einem entsprechenden Sensor stellt dem Motorsteuergerät 1 Messsignale bereit, welche Rückschlüsse auf die aktuelle Lage der Kurbelwelle erlauben. Das Motorsteuergerät 1 kann auf Grundlage dieser Signale beispielsweise die aktuelle

Motordrehzahl $n_{mot}$ ermitteln. Weitere Komponenten wie ein Öltemperatursensor 7 und ein Öldrucksensor 8 stellen dem Motorsteuergerät Größen bereit, die das Prozessverhalten beeinflussen, wie beispielsweise Öltemperatur oder Öldruck. Auf Basis dieser Größen kann beispielsweise die Nockenwellenprädiktionseinheit 4 eine Zeitkonstante der Übertragungsfunktion ermitteln.

Im obigen Ausführungsbeispiel wurde ein geschlossener Regelkreis bestehend aus einem Nockenwellenlageregler und einer Verstelleinrichtung durch eine PT1-Übertragungsfunktion approximiert. Auf Grundlage der oben beschriebenen Lehre sind jedoch alternative Ausführungsformen der erfindungsgemäßen Lehre möglich.

Beispielsweise könnten statt einer PT1-Übertragungsfunktion auch andere Übertragungsfunktionen, wie z.B. PT2 oder andere zum Einsatz kommen. Der Fachmann wird in solchen Fällen das Zustandsraummodell an die verwendete Übertragungsfunktion anpassen. Dem Fachmann ist beispielsweise bekannt, dass bei komplexeren Übertragungsfunktionen C im Allgemeinen als Matrix dargestellt wird. Bei PT1 reduziert sich diese Ausgangsmatrix C, welche die Zustände des Übertragungsglieds auf den Ausgang abbildet, wie oben beschrieben, auf ein Skalar. Bei SISO-Systemen (Single Input, Single Output) reduziert sich die Ausgangsmatrix C auf einen Vektor.

Ferner kann in alternativen Ausführungsformen statt eines vollständigen Regelkreises durch die Übertragungsfunktion auch lediglich ein Teil eines Regelkreises approximiert werden. Beispielsweise kann insbesondere die Stelleinrichtung (Phasenstellen) mittels eines I-Gliedes approximiert werden, das ein integratives Übertragungsverhalten aufweist. Die Prädiktion läuft im Falle der Approximation der Stelleinrichtung (Phasenstellen) mittels eines I-Gliedes ähnlich ab, wie bei dem oben beschriebenen PT1-Ausführungsbeispiel. Die Verstellgeschwindigkeit wird in Abhängigkeit verschiedener Motorparameter wie Drehzahl oder Öldruck, Öltemperatur und Tastverhältnis für den Phasensteller in einem Kennfeld hinterlegt. Anstatt der oben beschriebenen 5-Schritt-Prädiktion wird in einer Ausführungsform nur ein Prädiktionsschritt durchgeführt, d.h. $n = 1$. Der Eingang $u$ entspricht in diesem Fall nicht dem Nockenwellensollwert, sondern dem PWM-Tastverhältnis für den Phasensteller, das vom Nockenwellenlageregler ausgegeben wird.

**Bezugszeichenliste**

| | |
|---|---|
| 1 | Motorsteuergerät |
| 2 | Nockenwellenregelungseinheit |
| 3 | Füllungserfassungsfunktionseinheit |
| 4 | Nockenwellenprädiktionseinheit |
| 5 | Nockenwellengeberrad |
| 6 | Kurbelwellengeberrad |
| 7 | Öltemperatursensor |
| 8 | Öldrucksensor |
| 9 | Nockenwellenversteller |

| | |
|---|---|
| S1 | Bestimmung der Zeitkonstante $T_1$ |
| S2 | Bestimmung des Sollwerts $u_{soll}$ für die Nockenwellenposition |
| S3 | Bestimmung des Winkelabstands $w_{pred}$ |
| S4 | Abrufen der Motordrehzahl $n_{mot}$ |
| S5 | Berechnung der Konstante $h$ des PT1-Übertragungsglieds |
| S6 | Berechnung des Parameters $A$ des PT1-Übertragungsglieds |
| S7 | Berechnung des Parameters $B$ des PT1-Übertragungsglieds |
| S8 | Berechnung der prädizierten zukünftigen Nockenwellenposition $x_{pred}$ |
| S9 | Ausgabe der prädizierten zukünftigen Nockenwellenposition $x_{pred}$ |

| | |
|---|---|
| G | Übertragungsfunktion |
| $n_{mot}$ | Motordrehzahl |
| $w_{pred}$ | Winkelabstand |
| x | Zustand der Übertragungsfunktion |
| y | Ausgabewert der Übertragungsfunktion (aktuelle Nockenwellenposition) |
| $y_{pred}$ | prädizierte Nockenwellenposition |
| A, B | Parameter der Übertragungsfunktion |
| C, D | Weitere Parameter der Übertragungsfunktion |
| h | Prädiktionsschrittdauer |
| $T_1$ | Zeitkonstante |
| $u_{soll}$ | Sollwert für die Nockenwellenposition |

**Patentansprüche**

1. Verfahren zur Prädiktion einer zukünftigen Nockenwellenposition ($y_{pred}$), bei dem ein Regelkreis oder ein Teil eines Regelkreises, der wenigstens eine Verstelleinrichtung (9) umfasst, durch eine Übertragungsfunktion (G) approximiert wird und eine zukünftige Nockenwellenposition ($y_{pred}$) auf Grundlage der Übertragungsfunktion (G) ermittelt wird, wobei die prädizierte zukünftige Nockenwellenposition ($y_{pred}$) gemäß folgender Gleichung ermittelt wird

$$y_{pred} = A^n\, y + \sum_{i=0}^{n-1} A^i\, B\, u_{soll}$$

wobei $y_{pred}$ die prädizierte Nockenwellenposition bezeichnet, $u_{soll}$ den Sollwert für die Nockenwellenposition bezeichnet, y die Nockenwellenposition gemessen an der letzten Flanke bezeichnet, *A* und *B* Konstanten eines zeitdiskreten Zustandsraummodells des PT1-Übertragungsglieds sind, und *n* die Anzahl an Prädiktionsschritten angibt.

2. Verfahren nach Anspruch 2, wobei die Anzahl *n* an Prädiktionsschritten vorzugsweise *n* = 5 beträgt.

3. Verfahren nach einem der vorstehenden Ansprüche, wobei eine prädizierte zukünftige Nockenwellenposition ($y_{pred}$) zum Zeitpunkt des Öffnens und/oder des Schließens des Ladungswechselventils ermittelt wird.

4. Verfahren nach einem der vorstehenden Ansprüche, wobei die ermittelte prädizierte Nockenwellenposition ($y_{pred}$) zum Zeitpunkt des Öffnens bzw. des Schließens des Ventils in einer Füllungserfassungsfunktion (3) zur Optimierung des Frischluftanteils im Brennraum eines Kraftfahrzeugs verwendet wird.

5. Verfahren nach einem der vorstehenden Ansprüchen, wobei eine Filterzeit ($T_1$) der Übertragungsfunktion mittels eines Kennfelds bestimmt wird.

6. Computerprogramm, das dazu ausgelegt ist, das Verfahren nach einem der vorstehenden Ansprüche auszuführen.

7. Motorsteuerungsgerät, das dazu ausgelegt ist, das Verfahren nach einem der Ansprüche 1-7 auszuführen.

**Claims**

1. Method for predicting a future camshaft position ($y_{pred}$), in which a control loop or part of a control loop comprising at least one adjusting device (9) is approximated by a transfer function (G) and a future camshaft position ($y_{pred}$) is determined on the basis of the transfer function (G), wherein the predicted future camshaft position ($y_{pred}$) is determined according to the following equation

$$y_{pred} = A^n\, y + \sum_{i=0}^{n-1} A^i\, B\, u_{soll}$$

wherein $y_{pred}$ designates the predicted camshaft position, $u_{soll}$ designates the target value for the camshaft position, y designates the camshaft position measured on the last flank, *A* and *B* are constants of a time-discrete state-space model of the PT1 transmission element, and *n* indicates the number of prediction steps.

2. Method according to Claim 2, wherein the number *n* of prediction steps preferably amounts to *n* = 5.

3. Method according to any one of the preceding claims, wherein a predicted future camshaft position ($y_{pred}$) is determined at the point in time of opening and/or closing the charge cycle valve.

4. Method according to any one of the preceding claims, wherein the determined predicted camshaft position ($y_{pred}$) at the point in time of opening or closing the valve is used in a charge detection function (3) for optimizing the proportion of fresh air in the combustion chamber of a motor vehicle.

5. Method according to any one of the preceding claims, wherein a filter time ($T_1$) of the transfer function is determined by means of a characteristic diagram.

6. Computer program designed to perform the method according to any one of the preceding claims.

7. Engine control device designed to perform the method according to any one of Claims 1 to 7.

## Revendications

1. Procédé pour la prédiction d'une position future de l'arbre à cames ($y_{pred}$), dans lequel une boucle de régulation ou une partie d'une boucle de régulation, qui comprend au moins un dispositif de réglage (9), est approximée par une fonction de transfert (G) et une position future de l'arbre à cames ($y_{pred}$) est déterminée sur la base de la fonction de transfert (G), la position future prédite de l'arbre à cames ($y_{pred}$) étant déterminée conformément à l'équation suivante

$$y_{pred} = A^n\, y + \sum_{i=0}^{n-1} A^i\, B\, u_{soll}$$

où $y_{pred}$ correspond à la position future prédite de l'arbre à cames, $u_{soll}$ correspond à la valeur de consigne pour la position de l'arbre à cames, $y$ correspond à la position de l'arbre à cames mesurée sur le dernier flanc, $A$ et $B$ sont des constantes d'un modèle d'espace d'état à temps discret de l'élément de transfert PT1 et n indique le nombre d'étapes de prédiction.

2. Procède selon la revendication 2, dans lequel le nombre n d'étapes de prédiction est de préférence n = 5.

3. Procédé selon l'une quelconque des revendications précédentes, dans lequel une position future prédite de l'arbre à cames ($y_{pred}$) au moment de l'ouverture et/ou de la fermeture de la soupape de sélection de charge est déterminée.

4. Procédé selon l'une quelconque des revendications précédentes, dans lequel la position prédite déterminée de l'arbre à cames ($y_{pred}$) au moment de l'ouverture ou de la fermeture de la soupape est utilisée dans une fonction de détection de remplissage (3) pour l'optimisation du taux d'air frais dans la chambre de combustion d'un véhicule automobile.

5. Procédé selon l'une quelconque des revendications précédentes, dans lequel le temps de filtrage ($T_1$) de la fonction de transfert est déterminé au moyen d'un champ de caractéristiques.

6. Programme informatique qui est conçu pour exécuter le procédé selon l'une quelconque des revendications précédentes.

7. Appareil de commande de moteur qui est conçu pour exécuter le procédé selon l'une quelconque des revendications 1 à 7.

Fig. 1

S1 — $T_1$

S2 — $\rightarrow u_{soll}$

S3 — $\rightarrow w_{pred}$

S4 — $\rightarrow n_{mot}$

S5 — $h = \dfrac{60}{n_{mot}} \cdot \dfrac{w_{pred}}{360} \cdot \dfrac{1}{5}$

S6 — $A = 1 - \dfrac{h}{T_1}$

S7 — $B = \dfrac{h}{T_1}$

S8 — $y_{pred} = A^5 y + \displaystyle\sum_{i=0}^{4} A^i B\, u_{soll}$

S9 — $y_{pred} \rightarrow$

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012213539 A1
- US 6488008 B1